# EUROPEAN PATENT APPLICATION

(11) **EP 1 695 755 A1**
(43) Date of publication of application: **30.08.2006**
(21) Application number: 05075478.7
(22) Date of filing: 28.02.2005
(51) Int. Cl.: B01D 53/14, C02F 1/469

(54) **Process and system for the removal of ammonia from an ammonia containing gas stream**

(71) Applicant: DSM IP Assets B.V., 6411 TE Heerlen (NL); Uhde GmbH, 44141 Dortmund (DE)
(72) Inventor: Meessen, Jozef Hubert, 6321 AL Wijlre (NL); Erben, Axel, 44139 Dortmund (DE); Krijgsman, John, 6227 SV Maastricht (NL)
(74) Representative: Scheltus, Irma

(57) **Abstract**

The invention is directed to a process for the removal of ammonia from an ammonia-containing gas stream by treating the ammonia in the ammonia-containing gas stream with an acid, during which an aqueous stream comprising an ammonium salt, wherein the aqueous stream comprising the ammonium salt is treated with an Electro Membrane Process (EMP), whereby the acid is recovered.

## Description

The invention is directed to a process for the removal of ammonia from an ammonia-containing gas stream by treating the ammonia in the ammonia-containing gas stream with an acid, during which an aqueous stream comprising an ammonium salt is formed.

Such a process is described, for instance, in US-A-4424072. In this patent specification is described that the ammonia is removed from the gas stream exiting from the top of a prilling tower in a urea plant by contacting the gas stream in a scrubber with a non-volatile, dilute acid solution whereby the NH₃ is absorbed. According to US-A-4424072, non-volatile acid solutions include inorganic acids such as phosphoric acid, sulphuric acid and nitric acid as well as organic acids such as citric acid, oxalic acid and comparable non-volatile organic acids. According to US-A-4424072 the ammonia-free gas stream is vented to the air. It is mentioned that the obtained aqueous stream comprising the ammonium salt leaving the scrubbing section in the prilling tower can be recycled to the urea production process.

The drawback of using the process according to US-A-4424072, wherein the aqueous stream comprising the ammonium salt is recycled to the urea production process, is that contaminations by ammonium salts may occur in the final product, in this case urea, which contaminations are undesirable. For instance, ammonium salts in urea will usually render this urea unsuitable for the preparation of melamine. The separate processing of these ammonium salts (e.g. as a by-product) costs money and energy or often poses an environmental problem.

It has been found that the aforementioned drawback can be eliminated with a process wherein the aqueous stream comprising the ammonium salt is treated with an Electro Membrane Process (EMP), whereby the acid is recovered.

By performing the EMP on the aqueous stream comprising the ammonium salt the acid that has been used to remove the ammonia can be recovered and an aqueous stream comprising the ammonium salt is not recycled to the urea production causing contamination of the produced urea.

According to the process for the removal of ammonia from an ammonia-containing gas stream according to the invention the aqeous stream comprising the ammonium salt is treated with EMP.

Here and hereafter EMP is defined as an electrolytical process comprising an anode and a cathode which also comprises at least one membrane situated between the anode and cathode. This membrane can be an anion-permeable membrane, a cation-permeable membrane or a combination of one or more of these membranes with at least two bipolar membranes. Anion-permeable membranes and cation-permeable membranes are permeable for anions respectively cations when these ions are attracted by the cathode respectively the anode. Bipolar membranes consist of an anion-permeable membrane and a cation-permeable membrane laminated together. When this bipolar membrane is oriented such that the cation-permeable membrane faces the cathode water is split into protons and hydroxyl ions.

During the treatment of the aqueous stream comprising the ammonium salt the acid used for converting the ammonia in the ammonia-containing gas stream is recovered. This acid can thus be reused for converting the ammonia in the ammonia-containing gas stream. Acids that can be used for converting the ammonia are, for example, the organic acids and inorganic acids mentioned in US-A-4424072, as described above.

Preferably, during the process according to the invention also an aqueous stream containing ammonium hydroxide is formed during the EMP of the aqueous stream comprising the ammonium salt. After its formation this aqueous stream containing ammonium hydroxide can be heat treated, whereby a gaseous ammonia stream is formed.

The ammonia-containing gas stream can originate from various chemical processes, like the ammonia, urea and melamine production processes, but also from agricultural sources. The process according to the invention is in particular suitable for the treatment of ammonia-containing gas streams that contain low amounts of ammonia. These ammonia-containing gas streams are difficult to treat in an other way, for instance by separation and condensation, for removal of ammonia from these gas streams. Examples of ammonia-containing gas streams containing low amounts of ammonia are the gas streams that leave the prilling or the granulation sections of urea plants.

When the ammonia-containing gas stream, to be treated by the process according to the invention, is originating from the ammonia, urea or the melamine production processes the gaseous ammonia stream can be recycled to these processes. Before recycling the gaseous ammonia stream the gaseous stream can be treated to concentrate the ammonia in the gaseous stream.

EMP is performed in an electrochemical cell comprising an anode and cathode separated by an anion-permeable membrane or a cation-permeable membrane. Also a combination of one or more of these membranes with at least two bipolar membranes can be used. For the conversion of the ammonium salt in the aqueous stream in such a way that an acid is recovered and an ammonium hydroxide salt is formed, preferably the anode and the cathode are separated by at least one anion-permeable membrane. More preferably the electrochemical cell also comprises bipolar membranes and a cation permeable membrane.

The invention is also directed to an EMP section for treatment of an ammonia-containing gas stream comprising
- a scrubber, wherein an ammonia-containing gas stream is contacted with an acid,
- an EMP apparatus, wherein a stream comprising an acid and a stream comprising an ammonium hydroxide salt are generated, and
- a stripper wherein the stream comprising an ammonium hydroxide salt is heated and a gaseous ammonia stream is formed.

The EMP section preferably is incorporated into a urea plant, comprising a prilling section or a granulation section, to treat the ammonia-containing gas stream leaving the prilling or granulation section.

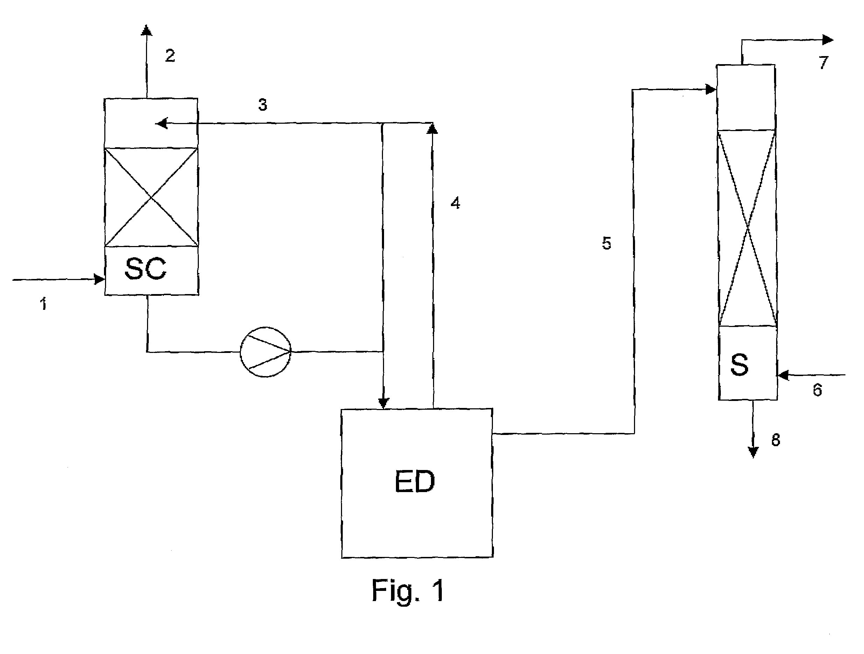

The invention will be further explained in detail with reference to the accompanying figure. In figure 1 an EMP section according to the invention is shown.

It comprises a scrubber (SC) wherein an ammonia-containing gas stream (1) is contacted with an acid solution (3). Clean air is vented from the scrubber via (2). The acid solution containing also the captured ammonia as an ammonium salt is transported with a pump partly to the EMP apparatus (ED) and partly back to the scrubber. The EMP apparatus comprises at least one membrane located between an anode and a cathode. A stream comprising the acid (4) is generated in the EMP apparatus (ED) and recycled to the scrubber (SC) and an other stream comprising an ammonium hydroxide salt (5), also generated in the EMP apparatus, is fed to the stripper (ST). In the stripper (ST) the ammonium hydroxide is converted with the aid of steam (6) in a gaseous ammonia stream (7), comprising water.

Two examples of possible configurations of an EMP apparatus according to the invention will be explained in more detail.

According to the first configuration the EMP apparatus consists of electrochemical cells comprising one anion-permeable membrane situated between an anode and a cathode dividing the cell in an anode compartment and a cathode compartment. To the cathode compartment the solution comprising the ammonium salt is fed. In the EMP apparatus the acid is formed in the anode compartment and the ammonium hydroxide salt is formed in the cathode compartment. A sulfuric acid solution with a pH between 0 and 2 can be used as the acid. In the scrubber ammoniumsulphate is formed. A part of the solution leaving the scrubber and containing the ammoniumsulphate is fed to the cathode compartment of the electrochemical cell. The sulphate ions are transferred through the membrane and are thereafter, in the anode compartment, converted into sulfuric acid. The ammonium ions are, in the cathode compartment, converted into ammonium hydroxide. Part of the sulfuric acid solution is recycled to the scrubber and part of the ammonium hydroxide solution is treated in the stripper.

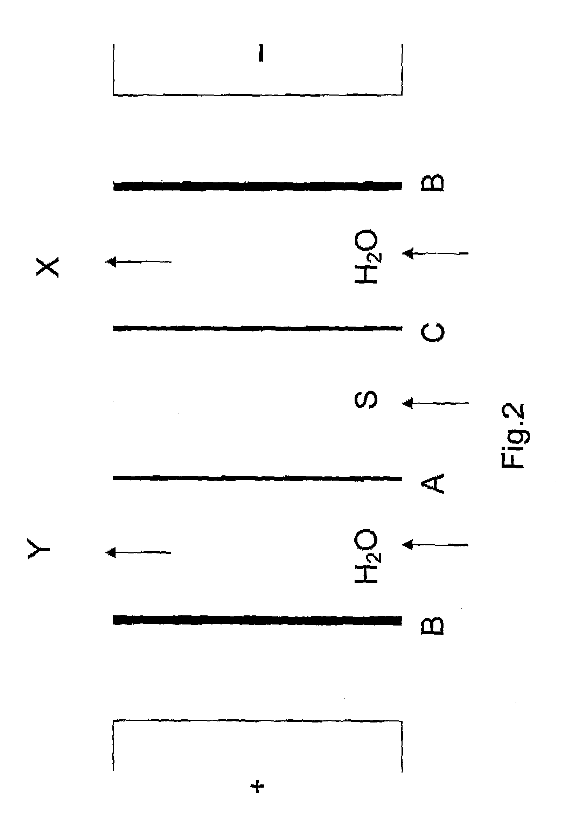

According to the second configuration the EMP apparatus consists of electrochemical cells comprising an anion permeable membrane and/or a cation permeable membrane and bipolar membranes situated between an anode and a cathode and ordered in a way known to a person skilled in the art. The electrochemical cell can for instance be a so-called three-compartment cell according to figure 2.

The ammonia-containing gas stream was contacted with a nitric acid solution with a pH between 0 and 2 in the scrubber. A part of the resulting solution comprising ammoniumnitrate was fed to the electrochemical cells in the EMP apparatus. The electrochemical cell is composed of an anion-permeable membrane (A), a cation-permeable membrane (C) and bipolar membranes (B) in an arrangement according to figure 2. The solution comprising ammoniumnitrate (S) was fed to the electrochemical cell. Water was split within the bipolar membrane and a nitric acid solution (Y) and ammonium hydroxide solution (X) are formed. Part of the nitric acid solution is recycled to the scrubber and part of the ammonium hydroxide solution is treated in the stripper.

## Claims

1. Process for the removal of ammonia from an ammonia-containing gas stream by treating the ammonia in the ammonia-containing gas stream with an acid, during which an aqueous stream comprising an ammonium salt is formed, **characterized in that** the aqueous stream comprising the ammonium salt is treated with an Electro Membrane Process (EMP), whereby the acid is recovered.

2. Process according to claim 1, **characterized in that** also an aqueous stream containing an ammonium hydroxide salt is formed.

3. Process according to any one of claims 1-2, **characterized in that** the aqueous stream containing an ammonium hydroxide salt is heat treated, whereby a gaseous ammonia stream is formed.

4. Process according to any one of claims 1-3, **characterized in that** the ammonia-containing gas stream is an off-gas stream from the prilling or granulation section of a process for the production of urea.

5. Process according to any one of claims 1-4, **characterized in that** the gaseous ammonia stream is recycled to the process for the production of urea.

6. Process according to any one of claims 1-5, **characterized in that** the EMP is performed in an electrochemical cell comprising an anode and cathode separated by an anion-permeable membrane, a cation-permeable membrane or a combination of one or more of these membranes with at least two bipolar membranes.

7. Process according to any one of claims 1-6, **characterized in that** the EMP is performed in an electrochemical cell comprising an anode and cathode separated by an anion-permeable membrane.

8. Process according to any one of claims 1-7, **characterized in that** the EMP is performed in an electrochemical cell comprising an anode and cathode separated by an anion-permeable membrane, a cation-permeable membrane and bipolar membranes.

9. EMP section comprising
• a scrubber, wherein an ammonia-containing gas stream is contacted with an acid,
• an EMP apparatus, wherein a stream comprising an acid and a stream comprising an ammonium hydroxide salt are generated, and
• a stripper wherein the stream comprising an ammonium hydroxide salt is heated and a gaseous ammonia stream is formed.

10. Urea plant comprising a prilling section or a granulation section, characteresed in that the EMP section according to claim 9 is used to treat the ammonia-containing gas stream leaving the prilling or granulation section.

11. Urea plant according to claim 10, **characterized in that** the gaseous ammonia stream formed in the EMP section is recirculated to the urea plant.
